# EUROPÄISCHE PATENTSCHRIFT

(11) **EP 3 874 988 B1**
(45) Veröffentlichungstag und Bekanntmachung des Hinweises auf die Patenterteilung: **22.01.2025**
(21) Anmeldenummer: 21159909.7
(22) Anmeldetag: 01.03.2021
(51) Int. Cl.: A47B 47/00, A47B 57/34, B65G 1/04

(54) **PALETTENREGAL**
PALLET RACK
ÉTAGÈRE À PALETTES

(30) Priorität: 05.03.2020 DE 102020202844
(43) Veröffentlichungstag der Anmeldung: 08.09.2021
(73) Patentinhaber: Hörl, Stephan, 82515 Wolfratshausen (DE)
(72) Erfinder: Hörl, Stephan, 82515 Wolfratshausen (DE)
(74) Vertreter: Friese Goeden Patentanwälte PartGmbB

(56) Entgegenhaltungen:
- DE-U- 1 911 667
- DE-U1- 20 303 178
- JP-U- S5 174 110
- US-A1- 2007 119 800

## Beschreibung

Die Erfindung betrifft ein Palettenregal gemäß dem Oberbegriff von Anspruch 1.

Palettenregale werden dafür verwendet, Paletten mit Gütern zu lagern. Die Palettenregale weisen in der Regel an seinen 4 Ecken Ständer auf, die mit Querträgern und Längsträgern miteinander verbunden sind. Zwischen den Ständern sind mehrere Palettenfächer vorgesehen, die übereinander angeordnet sind. Die Palettenfächer sind offen ausgebildet, d.h. die Palettenfächer weisen zumindest eine bezogen auf das Palettenregal nach vorne offene Seite auf, von der die Palette entnommen und eingebracht werden kann. Dazu weisen die Palettenregale Auflageträger auf, die an den Ständern befestigt sind und gegen ein Anheben gesichert sind.

Die Paletten können aus dem Palettenregal mit den darauf angeordneten Gütern mit einem Gabelstabler entnommen und an einen anderen Ort gebracht werden, wo diese benötigt werden. Wenn andere Güter mit einer Palette in dem Palettenregal aufbewahrt werden sollen, ist es gegebenenfalls erforderlich, die Höhe der Palettenfächer des Palettenregals an die Höhe der Güter anzupassen. Bei den bekannten Palettenregalen ist es erforderlich, die Befestigungen der Auflageträger mit großem Aufwand zu lösen, damit sie demontiert und an der neuen gewünschten Höhe an den Ständern montiert und befestigt werden können.

Aus den DE 19 11 667 U, JPS 51 74110 U und DE 203 03 178 U1 sind Palettenregale schon bekannt.

Die bekannten Palettenregale haben daher den Nachteil, dass ein Umrüsten der Palettenregale auf andere Höhen der Palettenfächer sehr arbeits- und zeitaufwendig ist. Außerdem sind für das Umrüsten meist Werkzeuge, wie z.B. Hammer und Zange, erforderlich.

Der Erfindung liegt daher die Aufgabe zugrunde, ein Palettenregal anzugeben, das im Vergleich zu den bekannten Palettenregalen schnell und einfach an andere Höhen angepasst bzw. umgerüstet werden kann, während gleichzeitig eine hohe Sicherheit gegenüber einem unerwünschten Ausheben gewährleistet ist.

Die Aufgabe wird erfindungsgemäß durch ein Palettenregal gemäß Anspruch 1 gelöst. Vorteilhafte Weiterbildungen der Erfindung finden sich in den Unteransprüchen.

Gemäß einer Ausführung der Erfindung wird ein Palettenregal mit mindestens vier Ständern angegeben, die mit Querträgern und Längsträgern miteinander verbunden sind, wobei in zumindest zwei Ständern erste Aufnahmeeinrichtungen ausgebildet sind, in denen erste Enden von Auflageträger anordbar sind, auf denen Paletten auflegbar sind, wobei die ersten Aufnahmeeinrichtungen derart ausgebildet und angeordnet sind, dass ein in einer ersten Aufnahmeeinrichtung angeordnetes erstes Ende eines Auflageträgers dagegen gesichert ist, um zumindest die Höhe des ersten Endes des Auflageträgers angehoben zu werden, wobei in zumindest zwei Ständern zweite Aufnahmeeinrichtungen ausgebildet sind, in denen jeweils ein einem ersten Ende eines Auflageträgers gegenüberliegendes Ende des Auflageträgers anordbar ist, wobei die zweiten Aufnahmeeinrichtungen derart ausgebildet und angeordnet sind, dass ein in einer zweiten Aufnahmeeinrichtung angeordnetes zweites Ende eines Auflageträgers zumindest um die Höhe des zweiten Endes des Auflageträgers anhebbar ist,
wobei für die Aufnahme einer Palette zumindest zwei erste Aufnahmeeinrichtungen (110) und zumindest zwei zweite Aufnahmeeinrichtungen (120) vorgesehen sind, wobei die ersten Aufnahmeeinrichtungen (110) jeweils als Öffnungen in den Ständern (100) ausgebildet sind, wobei die Form der Öffnungen im Wesentlichen dem Querschnitt der ersten Enden der Auflageträger (140) entspricht, wobei die zweiten Aufnahmeeinrichtungen (120) jeweils eine Öffnung aufweisen, die in ihrem unteren Bereich der Öffnung einer ersten Aufnahmeeinrichtung (110) entspricht und die einen oberen Bereich aufweist, in den ein in der zweiten Aufnahmeeinrichtung (120) angeordnetes zweites Ende eines Auflageträgers (140) anhebbar ist, und wobei die zumindest zwei ersten Aufnahmeeinrichtungen (110) in sich diagonal gegenüberliegenden Ständern (100) und die zumindest zwei zweiten Aufnahmeeinrichtungen (120) in den anderen beiden sich diagonal gegenüberliegenden Ständern (100) vorgesehen sind.

Diese Ausführung der Erfindung hat den Vorteil, dass die Auflageträger einfach und schnell entfernt und in einer neuen Höhe wieder angeordnet bzw. eingesetzt werden können.

Überraschenderweise hat sich herausgestellt, dass trotz der leichten Handhabbarkeit eine hohe Sicherheit gegenüber einem unbeabsichtigten Anheben besteht. Das ist daher der Fall, weil der Auflageträger mit einem Ende in einer Aufnahmeeinrichtung angeordnet ist, die ein Anheben des Auflageträgers um mehr als seine Höhe verhindert. Damit ist gesichert, dass der Auflageträger mit diesem Ende in der Aufnahmeeinrichtung sicher bleibt. Das dem ersten Ende gegenüberliegende zweite Ende des Auflageträgers ist in der zweiten Aufnahmeeinrichtung angeordnet und kann zumindest um die Höhe des zweiten Endes des Auflageträgers angehoben werden, so dass es beispielsweise nach vorne herausgenommen werden und an einer anderen geeigneten Stelle wieder eingesetzt werden kann, um die Höhe der Palettenfächer an die Bedürfnisse einzustellen.

Erfindungsgemäß ist vorgesehen, dass sich die ersten Aufnahmeeinrichtungen diagonal gegenüberliegen, weil dadurch ein unbeabsichtigtes Anheben der Palettenträger verhindert wird. Das ist insbesondere deshalb der Fall, weil der die beiden zusammengehörenden Auflageträger jeweils an einer Seite in einer ersten Aufnahmeeinrichtung angeordnet sind. Beispielsweise kann der vordere Auflageträger nicht auf seiner rechten Seite angehoben werden, während der hintere Auflageträger nicht auf seiner linken Seite angehoben werden kann.

Erfindungsgemäß sind für die Aufnahme einer Palette zumindest zwei erste Aufnahmeeinrichtungen und zumindest zwei zweite Aufnahmeeinrichtungen vorgesehen. Dabei sind die zumindest zwei ersten Aufnahmeeinrichtungen in sich diagonal gegenüberliegenden Ständern und die zumindest zwei zweiten Aufnahmeeinrichtungen in den anderen beiden sich diagonal gegenüberliegenden Ständern vorgesehen.

Erfindungsgemäß können in einem Ständer mehrere erste Aufnahmeeinrichtungen und mehrere zweite Aufnahmeeinrichtungen angeordnet sein.

Erfindungsgemäß können in einem ersten Ständer erste Aufnahmeeinrichtungen und einem zweiten Ständer mehrere zweite Aufnahmeeinrichtungen angeordnet sein. Erfindungsgemäß sind die ersten Aufnahmeeinrichtungen jeweils als Öffnungen in den Ständern ausgebildet, wobei die Form der Öffnungen im Wesentlichen dem Querschnitt der ersten Enden der Auflageträger entspricht.

Erfindungsgemäß können die ersten Aufnahmeeinrichtungen jeweils auf einer Innenseite eines Ständers ausgebildet sein, wobei die Innenseite einer Innenseite eines benachbarten Ständers des Palettenregals zugewandt ist.

Erfindungsgemäß weisen die zweiten Aufnahmeeinrichtungen jeweils eine Öffnung auf, die in ihrem unteren Bereich der Öffnung einer ersten Aufnahmeeinrichtung entspricht, und die einen oberen Bereich aufweist, in den ein in der zweiten Aufnahmeeinrichtung angeordnetes zweites Ende eines Auflageträgers anhebbar ist.

Dabei können der untere Bereich und zumindest ein Teil des oberen Bereichs der zweiten Aufnahmeeinrichtungen jeweils auf einer Innenseite eines Ständers ausgebildet sein, wobei die Innenseite einer Innenseite eines benachbarten Ständers des Palettenregals zugewandt ist. Alternativ und/oder zusätzlich können dabei zumindest ein Teil des oberen Bereichs der zweiten Aufnahmeeinrichtungen jeweils auf einer Vorderseite eines Ständers ausgebildet sein.

Erdfindungsgemäß können an dem Palettenregal Staplerschuhe vorgesehen sein, um das Regal samt Inhalt (Paletten und Waren) verfahren zu können.

Nachfolgend soll die Erfindung anhand von Figuren ohne Beschränkung des allgemeinen Erfindungsgedankens näher erläutert werden. Dabei werden folgende Bezugszeichen verwendet:
- 1: Palettenregal
- 100: Ständer
- 101: Vorderseite
- 102: Kante
- 103: Innenseite
- 110: Aufnahmeeinrichtung (ohne Anhebemöglichkeit)
- 111: Vorderseite
- 113: Hinterseite
- 112: Oberseite
- 114: Unterseite
- 120: Aufnahmeeinrichtung (mit Anhebemöglichkeit)
- 121: Vorderseite
- 122: Oberseite
- 123: Hinterseite
- 124: Unterseite
- 125: Hinterseite
- 126: Oberseite
- 127: Unterseite
- 128: Unterseite
- 130: Querträger
- 132: Verbindungsvorrichtung
- 133: Befestigungseinrichtung
- 140: Auflageträger
- 150: Längstäger
- 160: Diagonalstrebe
- 170: Bodenträger
- 171: Versteifungseinrichtung
- 172: Verbindungsvorrichtung
- 173: Befestigungseinrichtung
- 180: Staplerschuh
- 190: Ständerfuß
- 191: Aufnahmeeinrichtung
- 192: Verbindungsvorrichtung

Kurzbeschreibung der Figuren:
- Fig. 1: zeigt eine perspektivische Ansicht eines Palettenregals gemäß einer Ausführung der Erfindung von schräg vorne oben.
- Fig. 2: zeigt eine der Fig. 1 entsprechende Ansicht eines Palettenregals gemäß einer weiteren Ausführung der Erfindung.
- Fig. 3: zeigt eine vergrößerte Teilansicht des Palettenregals von Fig. 2.
- Fig. 4: zeigt eine vergrößerte Teilansicht des Palettenregals von Fig. 2.
- Fig. 5: zeigt eine vergrößerte Teilansicht des Palettenregals von Fig. 1 und/oder Fig. 2.
- Fig. 6: zeigt eine vergrößerte Teilansicht des Palettenregals von Fig. 1 und/oder Fig. 2.
- Fig. 7: zeigt eine schematische Ansicht eines Palettenregals gemäß einer Ausführung der Erfindung von oben, die der Ausführung von Fig. 1 und/oder Fig. 2 entspricht.
- Fig. 8: zeigt eine schematische Ansicht eines Palettenregals gemäß einer Ausführung der Erfindung von oben.
- Fig. 9: zeigt eine schematische Ansicht eines Palettenregals gemäß einer Ausführung der Erfindung von oben.
- Fig. 10: zeigt eine schematische Ansicht eines Palettenregals gemäß einer Ausführung der Erfindung von oben.

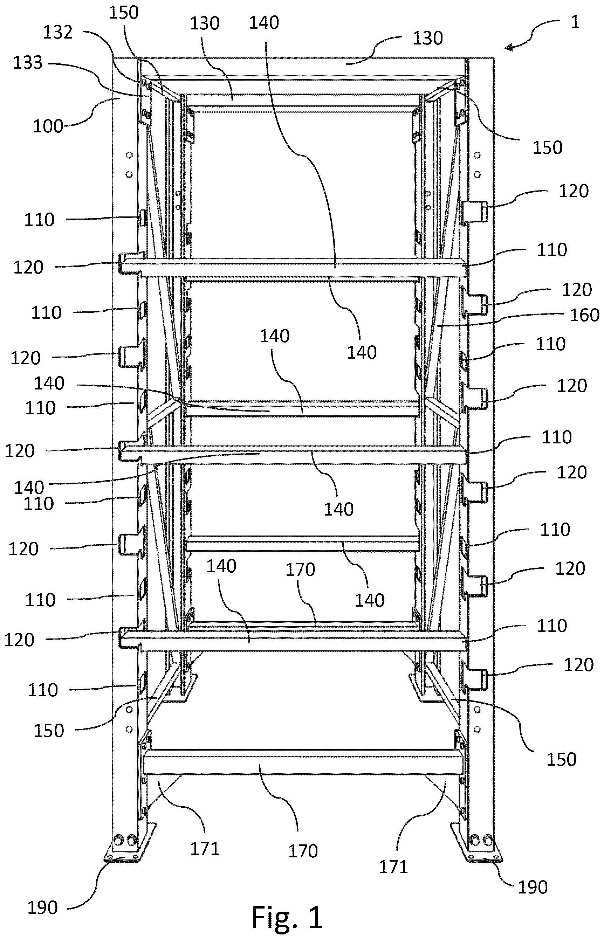

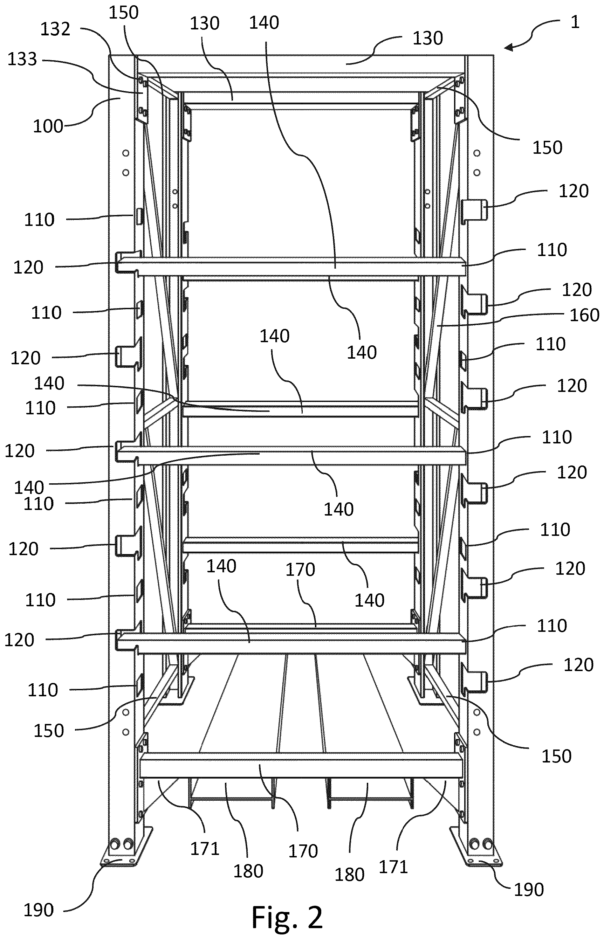

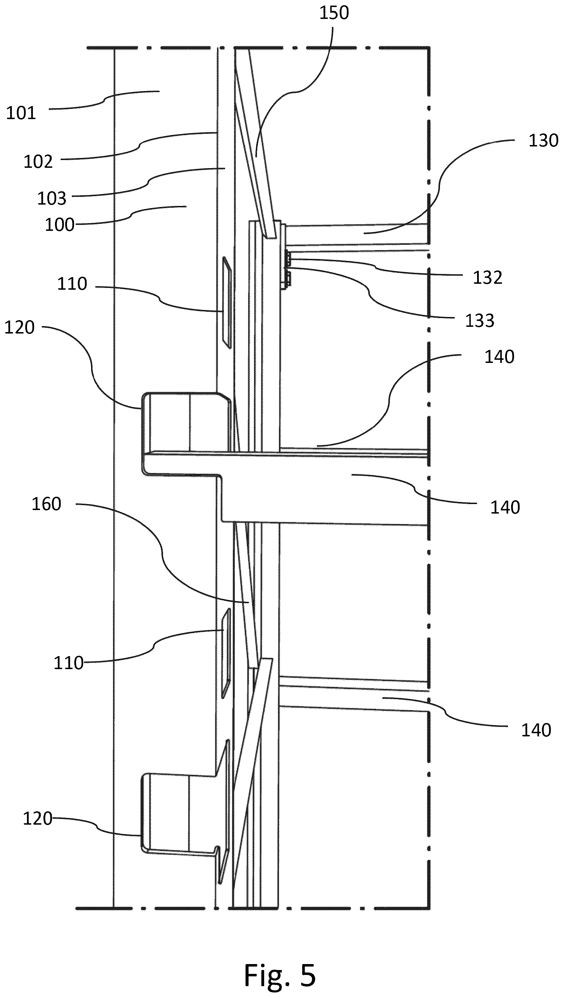

Die Figuren 1 bis 7 zeigen zwei Ausführungen eines Palettenregals gemäß einer Ausführung der Erfindung. Die beiden Ausführungen unterscheiden sich dadurch, dass eine Ausführung, wie z.B. in Fig. 1 gezeigt, keine Staplerschuhe 180 aufweist, während die andere Ausführung, wie z.B. in Fig. 2 gezeigt, Staplerschuhe 180 aufweist. Im folgenden sollen zunächst die Gemeinsamkeiten beschrieben werden.

Das Palettenregal 1 weist 4 Ständer 100 auf, die jeweils eine Vorderseite 101 und eine Innenseite 103 aufweisen. Die Vorderseite 101 ist nach vorne bzw. aussen gerichtet, während die Innenseite 103 einer ensprechenden Innenseite 103 eines benachbarten Ständers 100 gegenüberliegt. Die Vorderseite 101 ist über eine Kante 102 mit der Innenseite 103 verbunden. Die Ständer können somit ein L-Profil aus Vorderseite 101 und Innenseite 103 aufweisen. Alternativ und bevorzugt weisen die Ständer 100 ein quadratisches Profil auf, um eine höhere Stabilität zu schaffen. Die Ständer 100 können aber auch als U-Profil mit einer weiteren an die Vorderseite 101 oder die Innenseite 103 anschließenden Seite ausgebildet sein.

In zumindest zwei Ständern sind an den Innenseiten 103 Aufnahmeeinrichtungen 110 vorgesehen. Bei der gezeigten Ausführungen sind die Aufnahmeeinrichtungen 110 in allen Ständern 100 vorgesehen. Die Aufnahmeeinrichtungen 110 sind derart ausgebildet, dass in ihnen ein erstes Ende eines Auflageträgers 140 aufgenommen werden kann, und zwar so, dass das Erste Ende nicht stark bzw. nicht mehr als als seine Höhe angehoben werden kann.

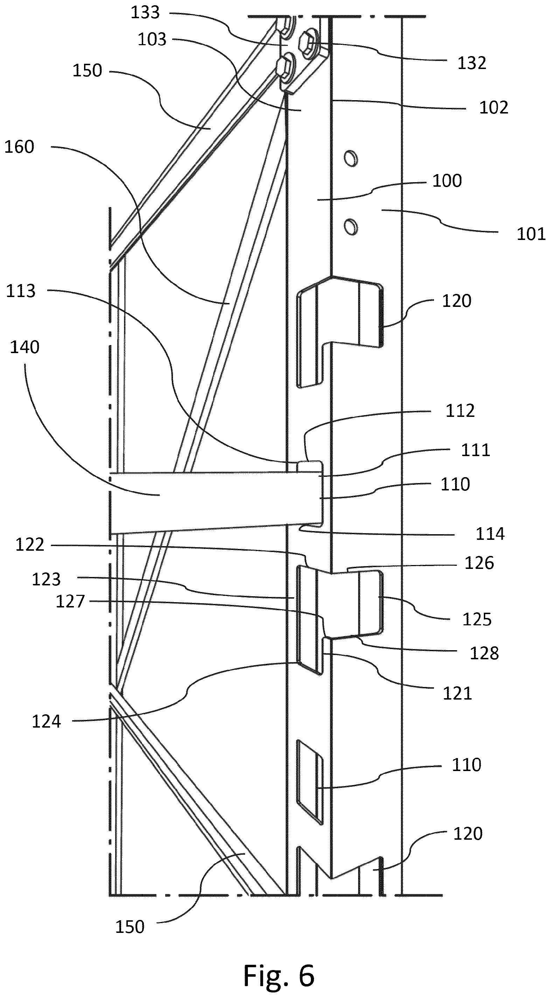

Wie z.B. in Fig. 6 gezeigt, weisen die an der Innenseite 103 der Ständer 100 vorgesehenen Aufnahmeeinrichtungen 110 jeweils eine Öffnung in der Innenseite 103 auf, die im Wesentlichen dem Querschnitt des ersten Endes des Auflageträgers 140 entspricht. Bei der gezeigten Ausführung der Erfindung in der Querschnitt im wesentlichen rechteckig. Vorzugsweise kann er quadratisch ausgebildet sein.

Die Aufnahmeeinrichtung 110 weist eine Vorderseite 111 auf, durch die ein in der Aufnahmeeinrichtung 110 angeordneter Auflageträger 140 gegen eine Bewegung nach vorne aus dem Palettenregal 1 heraus gesichert wird. Die Aufnahmeeinrichtung 110 weist ferner eine Hinterseite 113 auf, durch die ein in der Aufnahmeeinrichtung 110 angeordneter Auflageträger 140 gegen eine Bewegung nach hinten in das Palettenregal 1 hinein gesichert wird. Die Aufnahmeeinrichtung 110 weist ferner eine Oberseite 112 auf, durch die ein in der Aufnahmeeinrichtung 110 angeordneter Auflageträger 140 gegen ein Ausheben gesichert wird. Die Aufnahmeeinrichtung 110 weist ferner eine Unterseite 114 auf, auf der ein in der Aufnahmeeinrichtung 110 angeordneter Auflageträger 140 aufliegt bzw. abgestützt wird.

Wie z.B. in Fig. 6 gezeigt, weisen die an der Innenseite 103 und der Vorderseite 101 der Ständer 100 vorgesehenen Aufnahmeeinrichtungen 120 jeweils einen unteren Bereich bzw. Abschnitt, der im Wesentlichen einer Aufnahmeeinrichtung 110 entspricht, und einen oberenen Bereich bzw. Abschnitt auf, der sich an den unteren Bereich bzw. Abschnitt nach oben anschließt und nach vorne in die Vorderseite derart erstreckt, dass ein darin mit seinem zweiten Ende angeordneter Auflageträger 140 nach oben angehoben und dann nach vorne aus der Aufnahmeeinreichtung herausgeschnwenkt bzw. entfernt werden kann, so dass das andere erste Ende des Auflageträgers 140 aus der gegenüberliegenden Aufnahmeeinrichtung 110 in dem gegenüberliegenden Ständer 100 entfernt werden kann, um beispieslweise an einer anderen Stelle in einer gewünschten Höhe wieder eingesetzt werden zu können.

Die Aufnahmeeinrichtung 120 weist eine 124 Unterseite auf, auf der ein in der Aufnahmeeinrichtung 110 angeordneter Auflageträger 140 aufliegt bzw. abgestützt wird, und die im Wesentlichen der Unterseite 114 einer Aufnahmeeinrichtung 110 entspricht. Die Aufnahmeeinrichtung 120 weist ferner eine Hinterseite 123 auf, durch die ein in der Aufnahmeeinrichtung 120 angeordneter Auflageträger 140 gegen eine Bewegung nach hinten in das Palettenregal 1 hinein gesichert wird. Die Hinterseite 123 der Aufnahmeeinrichtung 120 entspricht im Wesentlichen der Hinterseite 113 der Aufnahmeeinrichtung 110, ist aber länger ausgebildet, so dass der Auflageträger nach oben zumindest soweit angehoben werden kann, dass er dann nach vorne aus der Aufnahmeeinrichtung 120 geschwenkt werden kann. Die Aufnahmeeinrichtung 120 weist ferner eine Oberseite 122 auf, durch die ein in der Aufnahmeeinrichtung 110 angeordneter Auflageträger 140 gegen ein weiteres Anheben gesichert wird. Die Aufnahmeeinrichtung 120 weist eine Vorderseite 121 auf, durch die ein in der Aufnahmeeinrichtung 120 angeordneter Auflageträger 140 gegen eine Bewegung nach vorne aus dem Palettenregal 1 heraus gesichert wird. Die Vorderseite 121 kann, wie gezeigt, etwas kürzer als die entsprechende Vorderseite 111 der Aufnahmeeinrichtung 110 ausgebildet sein. Alternativ kann sie auch genauso lang oder länger als die Vorderseite 111 der Aufnahmeeinrichtung 110 ausgebildet sein, um ein unbeabsichtigtes Lösen des zweiten Endes eines Auflageträgers noch zuverlässiger zu verhindern.

Der oberere Bereich bzw. Abschnitt der Aufnahmeeinrichtung 120 weist eine Unterseite 127 auf, die sich an die Vorderseite 121 anschließt und sich nach vorne bis zur Kante 102 erstreckt. Von der Kante 102 geht die Unterseite 127 in eine weitere Unterseite 128 über, die in der Vorderseite 101 des Ständers 100 ausgebildet ist. Die weitere Unterseite 128 geht in eine nach oben verlaufende Hinterseite 125 über. Die Lage der Hinterseite 125 bzw. die Länge der Unterseite 128 ist dabei derart gewählt, dass hinreichend Platz zum Entnehmen des zweiten Endes des Auflageträgeres 140 geschaffen wird. An die Hinterseite 125 schließt sich oben eine Oberseite 126 an, die sich paralell zur Unterseite 128 bis zur Kante 102 erstreckt und an der Kante in die Oberseite 122 übergeht.

Wie in den Ausführungen der Erfindung gezeigt, können die Aufnahmeeinrichtungen 110 und 120 in den Ständern abwechselnd übereinander angeordnet sein. Dabei sind die Aufnahmeeinrichtungen 110 bzw. 120 pro Palettenfach diagonal zueinander angeordnet, so dass der vordere Auflageträger 140 auf der anderen Seite als der hintere Auflageträger 140 zur Entnahme angehoben werden muss, wenn die Höhe des Palettenfachs verstellt und/oder angepaßt werden soll.

Alternativ können in auch mehrere gleiche Aufnahmeeinrichtungen 110 bzw. 120 in einem Ständer 100 übereinander angeordnet sein. Ebenso können in einem Ständer 100 nur Aufnahmeeinrichtungen 110 (mit einer Aushebesicherung) und einem benachbarten Ständer 100 nur Aufnahmeeinrichtungen 120 (mit einer begrenzten Aushebesicherung bzw. einer Aushebemöglichkeit) vorgesehen sein.

Die Ständer 100 sind an der Vorderseite bzw. Rückseite des Palettenregals 1 jeweils mit Querträgern 130 verbunden, die oben an dem Palettenregal 1 angeordnet sind. Als Befestigungseinrichtung 133 weisen die Querträger 130 Platten auf, die mit Verbindungseinrichtungen 132 an den Ständern 100 angebracht sind. Als Verbindungseinrichtungen 132 sind Schraubverbindungen vorgesehen. Es ist klar, dass andere dem Fachmann bekannte Verbindungseinrichtungen bzw. Befestigungseinrichtungen vorgesehen werden können. Beispielswiese können die Querträger 130 auch mit den Ständern 100 verschweißt sein.

Die vorderen Ständer 100 können mit den hinteren Ständern 100 mittels Längsträgern 150 verbunden sein, die entsprechend den Querträgern 130 an den Ständern befestigt bzw. mit diesen verbunden sein können.

Weiterhin können an der Seite des Palettenregals 1 zur Erhöhung der Steifigkeit Diagonalstrebe 160 vorgesehen sein. Alternativ oder zusätzlich kann ein Gitter bzw. können Gitter an der Seite vorgesehen sein, dass den Vorteil bietet, dass Güter nicht so leicht aus dem Palettenregal 1 herausfallen können.

Im unteren Bereich des Palettenregals 1 sind die vorderen Ständer 100 mit den hinteren Ständern 100 wie oben mit Längsträgern 150 verbunden. Entsprechende Längsträger 150 können je nach Höhe des Paltettenregals auch in Zwischenhöhen an beiden oder einer Seite des Paltetenregals 1 vorgesehen sein. Bei den Ausführungen gemäß Fig. 1 bzw. Fig. 2 ist auf jeder Seite ein Längsträger auf etwa halber Höhe vorgesehen.

Weiterhin sind Bodenträger 170 vorgesehen, die die vorderen Ständer 100 und die hinteren Ständer 100 im unteren Bereich miteinander verbinden. Die Bodenträger weisen an den Seiten jeweils eine Versteifungseinrichtung 171 auf, die von dem Bodenträger quer nach unten zu dem entsprechenden Ständer 100 verläuft.

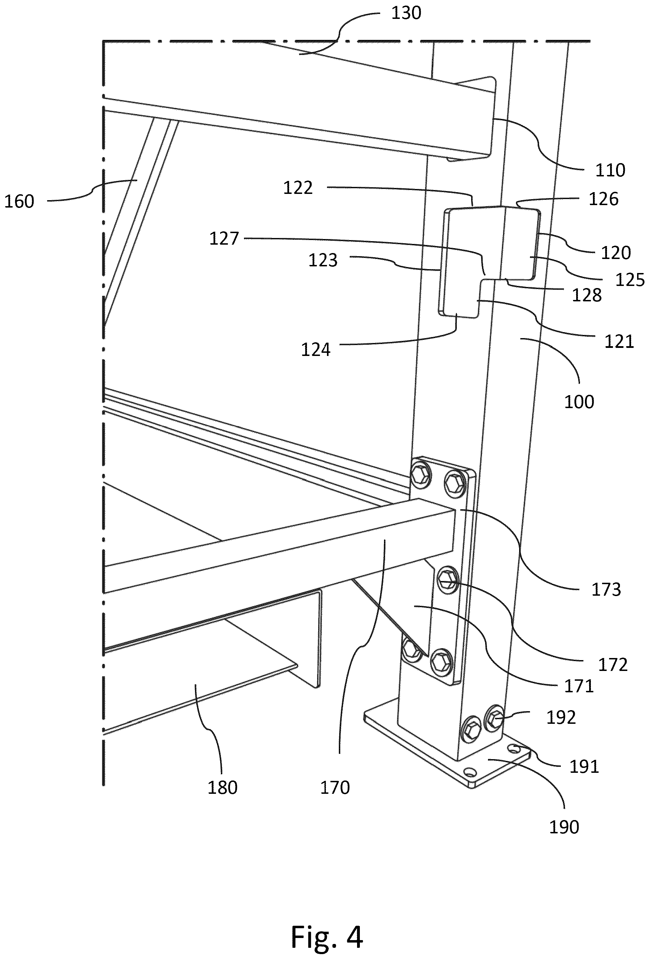

Als Befestigungseinrichtung 173 weisen die Bodenträger 170 und die Versteifungseinrichtungen 171 Platten auf, die mit Verbindungseinrichtungen 172 an den Ständern 100 angebracht sind. Als Verbindungseinrichtungen 172 sind, wie z.B,. in Fig. 4 gezeigt, Schraubverbindungen vorgesehen. Es ist klar, dass andere dem Fachmann bekannte Verbindungseinrichtungen bzw. Befestigungseinrichtungen vorgesehen werden können. Beispielswiese können die Querträger 170 auch mit den Ständern 100 verschweißt sein.

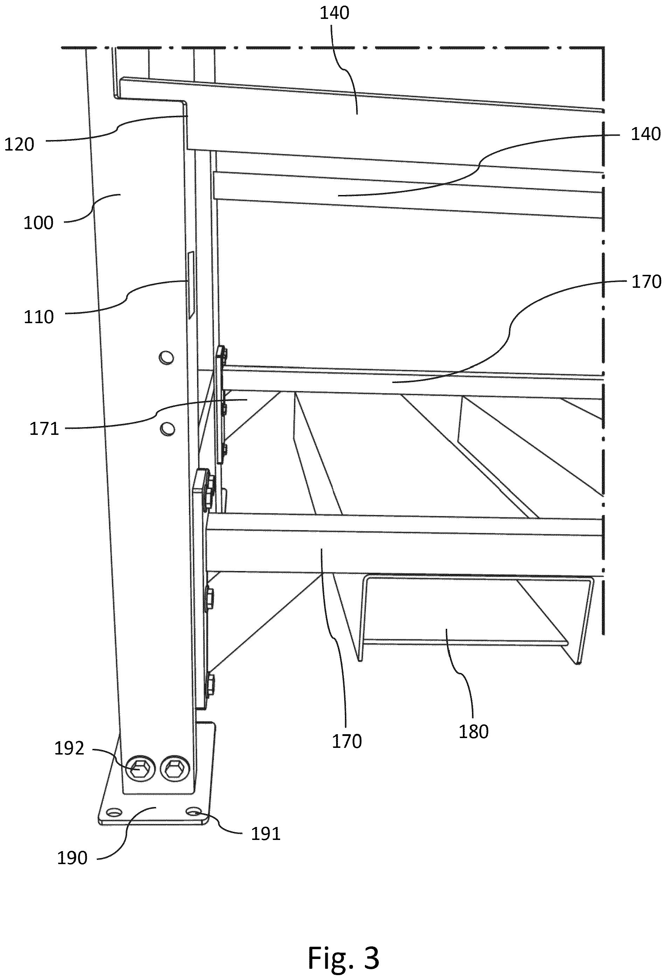

Wie z.B. in Fig. 3 gezeigt, können unten an den Ständern 100 Ständerfüße 190 angeordnet sein. Die Ständerfüße 190 können dabei Aufnahmeeinrichtungen 191 aufweisen, die z.B. als Bohrungen ausgebildet sein können, mit denen das Palettenregal an dem Boden befestigt werden kann, wenn das Palettenregal 1 beispielsweise als standfestes Regal verwendet werden soll. Die Ständerfüße 190 können an den Ständern 100 mit Verbindungseinrichtungen 192 angebracht sein. Als Verbindungseinrichtungen 179 sind, wie z.B,. in Fig. 3 gezeigt, Schraubverbindungen vorgesehen. Es ist klar, dass andere dem Fachmann bekannte Verbindungseinrichtungen bzw. Befestigungseinrichtungen vorgesehen werden können. Beispielswiese können die Ständerfüße 190 auch mit den Ständern 100 verschweißt sein.

Wenn das Palettenregal 1 leicht transportierbar ausgebildet sein sein soll, ist es besonders vorteilhaft, wie z.B. in Fig. 1 gezeigt, Staplerschuh 180 vorzusehen. Das hat den Vorteil, dass das ganze Palettenregal ebenso wie einzelne Paletten mit einem Gebelstabler an einen gewünschten Ort gebracht werden kann. Die Staplerschuhe 190 können an den Bodenträgern, wie in Fig. 2 gezeigt, auf dem Fachmann bekannte Weise befestigt sein. Beispielswiese können die Staplerschuhe 180 mit den Bodenträgern 170 verschweißt oder verschraubt sein.

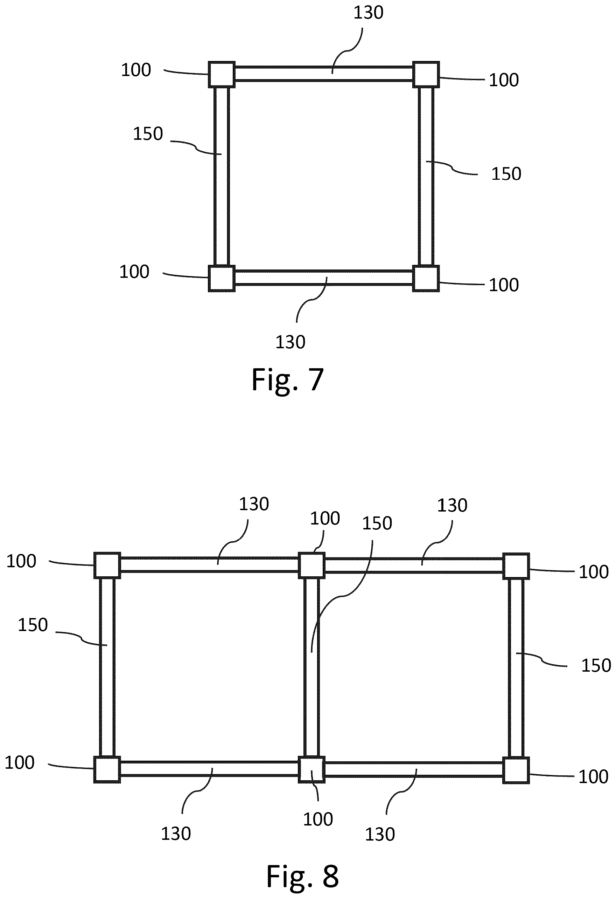

Fig. 7 zeigt, dass das Palettenregal gemäß einer Ausführung 4 Ständer 100 aufweisen kann, die oben mit Querträgern 130 und Längstägern 150 miteinander verbunden sind. Unter den Querträgern 130 und über den Bodenträgern 170 sind die in der Höhe variabel anordbaren Auflageträger 140 vorgesehen.

Fig. 8 zeigt eine Ausführungsform, bei der mehrere Palettenfächer nebeneinander angeordnet sind, die jeweils von vorne oder hinten beladbar sind. Beispielhaft sind zwei nebeneinander angeordnete Palettenfächer gezeigt, wobei die nebeneinander angeordneten Palettenfächer auch verschiedene Höhen aufweisen können.

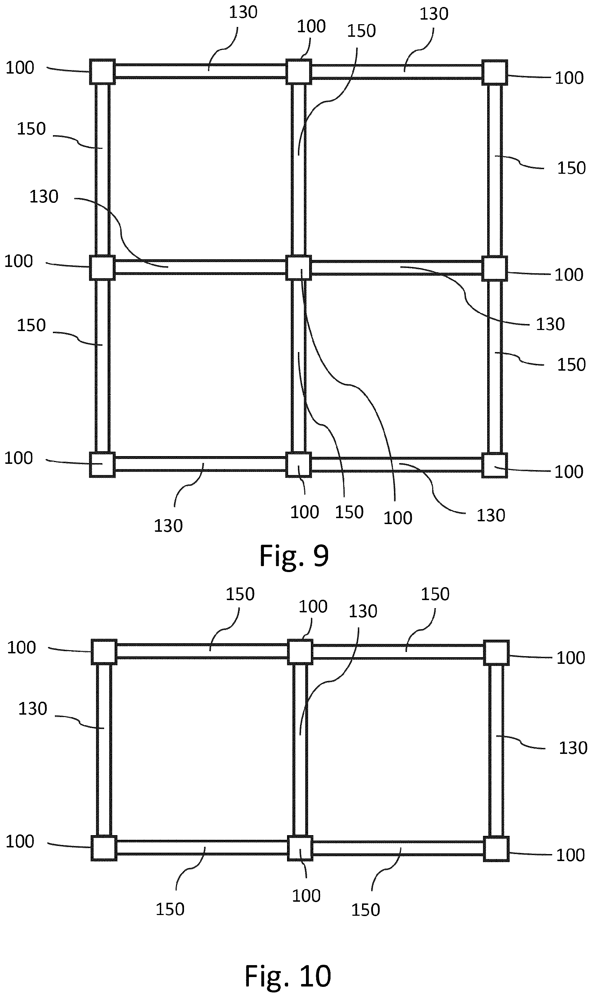

Fig. 9 zeigt eine Ausführungsform, bei der mehrere Palettenfächer nebeneinander und voreinander angeordnet sind. Die vorderen Palettenfächer können von vorne und die hinteren Palettenfächer können von hinten beladen werden. Beispielhaft sind vier Palettenfächer gezeigt, die zwei nebeneinander und hintereinander angeordnet sind.

Es ist klar, dass auch die in den Figuren 8 und 9 gezeigten Ausführungen mit weiteren daneben angeordneten Palettenfächern ergänzt werden können. Wie in Fig. 10 gezeigt, kann auch ein Palettenregal mit hintereinander angeordneten Palettenfächern vorsehen sein, wobei die vorderen Palettenfächer (in Fig. 10 z.B. die linken) von vorne und die hinteren Palettenfächern (in Fig. 10 z.B. die rechten) von hinten beladbar sein können.

## Patentansprüche

1. Palettenregal (1) mit mindestens vier Ständern (100), die mit Querträgern (130, 170) und Längsträgern (150) miteinander verbunden sind, wobei in zumindest zwei Ständern erste Aufnahmeeinrichtungen (110) ausgebildet sind, in denen erste Enden von Auflageträger (140) anordbar sind, auf denen Paletten auflegbar sind, wobei die ersten Aufnahmeeinrichtungen (110) derart ausgebildet und angeordnet sind, dass ein in einer ersten Aufnahmeeinrichtung (110) angeordnetes erstes Ende eines Auflageträgers (140) dagegen gesichert ist, zumindest um die Höhe des ersten Endes des Auflageträgers (140) angehoben zu werden,
wobei in zumindest zwei Ständern (100) zweite Aufnahmeeinrichtungen (120) ausgebildet sind, in denen jeweils ein einem ersten Ende eines Auflageträgers (140) gegenüberliegendes Ende des Auflageträgers (140) anordbar ist, wobei die zweiten Aufnahmeeinrichtungen (120) derart ausgebildet und angeordnet sind, dass ein in einer zweiten Aufnahmeeinrichtung (120) angeordnetes zweites Ende eines Auflageträgers (140) zumindest um die Höhe des zweiten Endes des Auflageträgers (140) anhebbar ist,
wobei für die Aufnahme einer Palette zumindest zwei erste Aufnahmeeinrichtungen (110) und zumindest zwei zweite Aufnahmeeinrichtungen (120) vorgesehen sind, wobei die ersten Aufnahmeeinrichtungen (110) jeweils als Öffnungen in den Ständern (100) ausgebildet sind,
wobei die Form der Öffnungen im Wesentlichen dem Querschnitt der ersten Enden der Auflageträger (140) entspricht,
wobei die zweiten Aufnahmeeinrichtungen (120) jeweils eine Öffnung aufweisen, die in ihrem unteren Bereich der Öffnung einer ersten Aufnahmeeinrichtung (110) entspricht und die einen oberen Bereich aufweist, in den ein in der zweiten Aufnahmeeinrichtung (120) angeordnetes zweites Ende eines Auflageträgers (140) anhebbar ist, **dadurch gekennzeichnet, dass** die zumindest zwei ersten Aufnahmeeinrichtungen (110) in sich diagonal gegenüberliegenden Ständern (100) und die zumindest zwei zweiten Aufnahmeeinrichtungen (120) in den anderen beiden sich diagonal gegenüberliegenden Ständern (100) vorgesehen sind.

2. Palettenregal (1) nach Anspuch 1, **dadurch gekennzeichnet, dass** in einem Ständer (100) mehrere erste Aufnahmeeinrichtungen (110) und mehrere zweite Aufnahmeeinrichtungen (120) angeordnet sind.

3. Palettenregal (1) nach einem der vorhergehenden Ansprüche, **dadurch gekennzeichnet, dass** in einem ersten Ständer (100) erste Aufnahmeeinrichtungen (110) und einem zweiten Ständer (100) mehrere zweite Aufnahmeeinrichtungen (120) angeordnet sind.

4. Palettenregal (1) nach einem der vorhergehenden Ansprüche, **dadurch gekennzeichnet, dass** die ersten Aufnahmeeinrichtungen (110) jeweils auf einer Innenseite (102) eines Ständers (100) ausgebildet sind, wobei die Innenseite (102) einer Innenseite (102) eines benachbarten Ständers (100) des Palettenregals (1) zugewandt ist.

5. Palettenregal (1) nach einem der vorhergehenden Ansprüche, **dadurch gekennzeichnet, dass** der untere Bereich und zumindest ein Teil des oberen Bereichs der zweiten Aufnahmeeinrichtungen (120) jeweils auf einer Innenseite (102) eines Ständers (100) ausgebildet ist, wobei die Innenseite (102) einer Innenseite (102) eines benachbarten Ständers (100) des Palettenregals (1) zugewandt ist, und/oder zumindest ein Teil des oberen Bereichs der zweiten Aufnahmeeinrichtungen (120) jeweils auf einer Vorderseite eines Ständers (100) ausgebildet ist.

6. Palettenregal (1) nach einem der vorhergehenden Ansprüche, **dadurch gekennzeichnet, dass** an dem Palettenregal (1) Staplerschuhe (180) vorgesehen sind.

## Claims

1. Pallet rack (1) having at least four stands (100), which are connected to one another by means of crossbeams (130, 170) and longitudinal beams (150), at least two stands being provided with first receiving devices (110), in which it is possible to arrange first ends of support beams (140) on which pallets can be placed, the first receiving devices (110) being designed and arranged in such a way that a first end of a support beam (140) that is arranged in a first receiving device (110) is secured against being raised at least by the height of the first end of the support beam (140),
at least two stands (100) being provided with second receiving devices (120), in each of which one end of a support beam (140) lying opposite to a first end of the support beam (140) can be arranged, the second receiving devices (120) being designed and arranged in such a way that a second end of a support beam (140) that is arranged in a second receiving device (120) can be raised at least by the height of the second end of the support beam (140),
at least two first receiving devices (110) and at least two second receiving devices (120) being provided for receiving a pallet, the first receiving devices (110) being each formed as openings in the stands (100), and the shape of the openings corresponding substantially to the cross-section of the first ends of the support beams (140),
the second receiving devices (120) each having an opening which, in its lower region, corresponds to the opening of a first receiving device (110) and which has an upper region into which a second end of a support beam (140) can be raised, the second end of the support beam being arranged in the second receiving device (120), **characterized in that**
the at least two first receiving devices (110) are provided in diagonally opposite stands (100) and the at least two second receiving devices (120) are provided in the other two diagonally opposite stands (100).

2. Pallet rack (1) according to claim 1, **characterized in that** a plurality of first receiving devices (110) and a plurality of second receiving devices (120) are arranged in a stand (100).

3. Pallet rack (1) according to any one of the preceding claims, **characterized in that** first receiving devices (110) are arranged in a first stand (100) and a plurality of second receiving devices (120) are arranged in a second stand (100).

4. Pallet rack (1) according to any one of the preceding claims, **characterized in that** the first receiving devices (110) are each formed on an inner side (102) of a stand (100), the inner side (102) facing an inner side (102) of an adjacent stand (100) of the pallet rack (1).

5. Pallet rack (1) according to any one of the preceding claims, **characterized in that** the lower region and at least part of the upper region of the second receiving devices (120) are each formed on an inner side (102) of a stand (100), the inner side (102) facing an inner side (102) of an adjacent stand (100) of the pallet rack (1), and/or at least part of the upper region of the second receiving devices (120) is formed in each case on a front side of a stand (100).

6. Pallet rack (1) according to any one of the preceding claims, **characterized in that** forklift shoes (180) are provided on the pallet rack (1).

## Revendications

1. Rayonnage à palettes (1) comprenant au moins quatre montants (100) reliés entre eux par des traverses (130, 170) et par des longerons (150), dans lequel
des premiers dispositifs de réception (110) sont formés dans au moins deux montants, dans lesquels peuvent être disposées des premières extrémités de supports d'appui (140) sur lesquels peuvent être posées des palettes,
les premiers dispositifs de réception (110) sont conçus et disposés de telle sorte qu'une première extrémité d'un support d'appui (140) disposée dans un premier dispositif de réception (110) est empêchée d'être soulevée au moins de la hauteur de la première extrémité du support d'appui (140),
des deuxièmes dispositifs de réception (120) sont formés dans au moins deux montants (100), dans chacun desquels peut être disposée une extrémité d'un support d'appui (140) opposée à une première extrémité du support d'appui (140),
les deuxièmes dispositifs de réception (120) sont formés et disposés de telle sorte qu'une deuxième extrémité d'un support d'appui (140) disposée dans un deuxième dispositif de réception (120) peut être soulevée au moins de la hauteur de la deuxième extrémité du support d'appui (140),
il est prévu au moins deux premiers dispositifs de réception (110) et au moins deux deuxièmes dispositifs de réception (120) pour recevoir une palette,
les premiers dispositifs de réception (110) sont chacun conçus comme des ouvertures dans les montants (100), la forme des ouvertures correspondant sensiblement à la section transversale des premières extrémités des supports d'appui (140),
les deuxièmes dispositifs de réception (120) présentent chacun une ouverture qui correspond, dans sa zone inférieure, à l'ouverture d'un premier dispositif de réception (110) et qui présente une zone supérieure dans laquelle peut être soulevée une deuxième extrémité d'un support d'appui (140) disposée dans le deuxième dispositif de réception (120),
**caractérisé en ce que**
lesdits au moins deux premiers dispositifs de réception (110) sont prévus dans des montants (100) opposés en diagonale, et lesdits au moins deux deuxièmes dispositifs de réception (120) sont prévus dans les deux autres montants (100) opposés en diagonale.

2. Rayonnage à palettes (1) selon la revendication 1,
**caractérisé en ce que** plusieurs premiers dispositifs de réception (110) et plusieurs deuxièmes dispositifs de réception (120) sont disposés dans un montant (100).

3. Rayonnage à palettes (1) selon l'une des revendications précédentes, **caractérisé en ce que** des premiers dispositifs de réception (110) sont disposés dans un premier montant (100) et plusieurs deuxièmes dispositifs de réception (120) sont disposés dans un deuxième montant (100).

4. Rayonnage à palettes (1) selon l'une des revendications précédentes, **caractérisé en ce que** les premiers dispositifs de réception (110) sont formés chacun sur une face intérieure (102) d'un montant (100), ladite face intérieure (102) étant tournée vers une face intérieure (102) d'un montant voisin (100) du rayonnage à palettes (1).

5. Rayonnage à palettes (1) selon l'une des revendications précédentes, **caractérisé en ce que** la zone inférieure et au moins une partie de la zone supérieure des deuxièmes dispositifs de réception (120) sont formées chacune sur une face intérieure (102) d'un montant (100), la face intérieure (102) étant tournée vers une face intérieure (102) d'un montant voisin (100) du rayonnage à palettes (1), et/ou au moins une partie respective de la zone supérieure des deuxièmes dispositifs de réception (120) est formée sur une face avant d'un montant (100).

6. Rayonnage à palettes (1) selon l'une des revendications précédentes, **caractérisé en ce que** des sabots pour chariot élévateur (180) sont prévus sur le rayonnage à palettes (1).
